# EUROPEAN PATENT SPECIFICATION

(11) **EP 2 224 654 B1**
(45) Date of publication and mention of the grant of the patent: **20.07.2011**
(21) Application number: 09154048.4
(22) Date of filing: 27.02.2009
(51) Int. Cl.: H04L 12/58, H04L 29/08

(54) **Method and system for distribution of presence information**
Verfahren und System zur Verteilung von Präsenzinformation
Procédé et système pour la distribution d'informations de présence

(43) Date of publication of application: 01.09.2010
(73) Proprietor: RESEARCH IN MOTION LIMITED, Waterloo, Ontario N2L 3W8 (CA)
(72) Inventor: Brown, Robert William, Kanata Ontario K2K 2A5 (CA); Preiss, Bruno Richard, Waterloo Ontario N2L 5Z5 (CA); Lewis, Allan, Waterloo Ontario N2L 5Z5 (CA); George, Richard, Waterloo Ontario N2L 5Z5 (CA); McColgan, Brian Edward Anthony, Mississauga Ontario L4W 5M4 (CA); Godfrey, James Andrew, Waterloo Ontario N2L 5Z5 (CA)
(74) Representative: Moore, Barry

(56) References cited:
- WO-A-2006/125183
- US-A1- 2003 078 981
- US-A1- 2005 204 007
- US-A1- 2007 038 720

## Description

### FIELD OF THE DISCLOSURE

The present disclosure relates to a data service and in particular to the distribution of data from the data service.

### BACKGROUND

A data service for the distribution of data could include a presence information service, a location information service, among others. Distribution of data from a data service can be a difficult problem in both wired and wireless networks. The present disclosure refers to a presence service as an exemplary data service. The use of a presence service is not meant to be limiting, and other data services would be apparent to those skilled in the art.

For a presence service, distribution of presence data can be problematic because presence information can become verbose, particularly when taking into account the subtle nuances for the state of presentities. Verbose communication leads to increased traffic for the network, resulting in less bandwidth being available for other terminals, or reduced service offerings available for each terminal. If the terminal is a wireless device, increased verbosity further leads to increased battery usage since a receiver on the device needs to be turned on for longer periods.

WO2006/125183 which describes a method for the user to define different sets of personification information for different groups of individuals in the users' contact information. A group definition allows for the user to define recipient who receive a particular version of contact information. The sharing of contact information is done of the basis of user definition. US2003/0078981 describes a method of scanning of messages in an email inbox to retrieve display names and SMTP addresses of senders and/or recipients for each email. The method further provides for the selective filtering of information of the emails to populate the users contact list with new names.

Verbose communication also adds considerable complexity to a client application running on a terminal, among other factors.

Complexity also exists for a presentity needing to 'identify' and authorize possible watchers in current systems.

Various solutions exist to distribute data, including the Extensible Messaging and Presence Protocol (XMPP). XMPP is a protocol evolved from an instant messaging platform known as "Jabber" and defines an extensible markup language (XML) based protocol for the exchange of presence information between a presentity and a watcher. XMPP makes use of a roster mechanism for the management of contact lists. The XML protocol is not optimized for transport, particularly in a wireless network realization.

A second solution is the Open Mobile Alliance (OMA) presence enabler. The OMA presence enabler defines a Session Initiation Protocol (SIP) based protocol for the exchange of presence information between a presentity and a watcher. The OMA presence enabler makes use of information elements, and further permits extension of these information elements based on the Engineering Task Force (IETF) specified PIDF/RPID presence data models. The information elements are protocol independent and do not provide specific directives to the underlying transport layer to optimize delivery. The SIP protocol is a chatty protocol intended primarily for the wired domain and was originally designed for use in wire-line voice over internet protocol (VOIP)/call control applications.

### SUMMARY

The present disclosure provides a method for distributing data between a first user and a second user in accordance with claim 1. Further advantageous features are provided in accordance with the dependent claims.

The present disclosure further provides a data service within a network for distributing data, in accordance with claim 9. Further advantageous features are provided in accordance with dependent claims 10 and 11.

### BRIEF DESCRIPTION OF THE DRAWINGS

The present disclosure will be better understood with reference to the drawings in which:
**Figure 1** is a block diagram of network including a presence service having a roster;
**Figure 2** is a block diagram of a roster matrix with data element attributes;
**Figure 3** is a block diagram of an exemplary mask to be applied to data element attributes;
**Figure 4** is a data flow diagram showing communications in a proactive presence system without a roster;
**Figure 5** is a data flow diagram showing communications in a reactive presence system without a roster;
**Figure 6** is a data flow diagram showing communications in a presence system with a roster;
**Figure 7** is a block diagram showing an exemplary mobile device capable of being used with the present systems and methods.

### DETAILED DESCRIPTION

As used in the present disclosure, the following terms have the following meanings:
Presentity - an individual or entity possessing state.
Presence Source - a logical entity that publishes presence information.
Watcher - an individual or entity wishing to consume a presentities presence information.

The present disclosure relates to the delivery and receipt of data from a data service. In the case of a presence data service, the present disclosure relates to the delivery and receipt of presence information relating to a presentity on behalf of a watcher. The protocol is coupled to a particular presence data model. The model includes basic information elements, which capture presence metadata relating to a presentity for later distribution to a series of interested watchers. Information elements, as used herein, include metadata such as telephone numbers, e-mails, personal identification, among others.

The present disclosure further relates to reducing complexity on behalf of a presentity needing to 'identify' and authorize possible watchers in current systems.

Each information element has one or more associated attributes. Element attributes may differ for a given watcher. Such element attributes may include one or more of the following.

One element attributes may be a data type. A data type is a primitive for an associated data element and can include, for example, integers, floating point numbers, Unicode strings, boolean values, among others.

A further element attribute may be a notification type attribute. This could indicate how the protocol distributes associated presence elements and options could include continuous, one shot (i.e. single) or rule based notifications, among others.

A subscription element attribute could indicate a subscription direction for a given presence element and may include to (i.e. from watcher to presentity), from (i.e. from presentity to watcher), or both (i.e. to and from), to indicate the direction of subscription flow.

Further, a privacy element attribute could be utilized as an indicator of whether this information should be shared and if so, with whom.

The above list of element attributes is not exhaustive, and other element attributes could be utilized for a presence data service.

The present disclosure provides for a roster based mechanism. As used herein, a roster is a data structure used to "capture" a user's list of direct or indirect contacts.. The roster solves the problem of a presentity having to identify (and potentially) authorize a watcher (or prospective watcher). The roster is an internal structure composed and maintained by the presence service. In a preferred embodiment, it is not a contact list overtly visible or modifiable by a presence user.

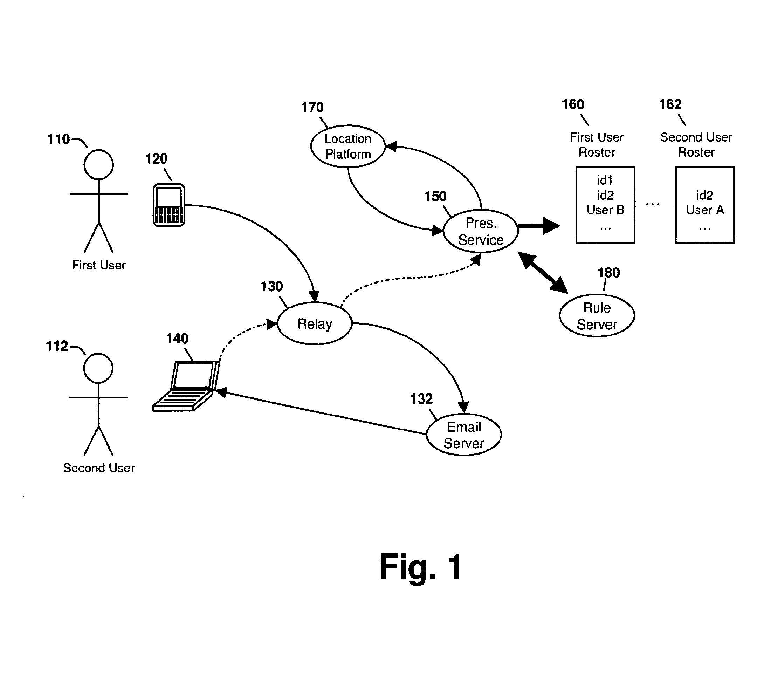

Reference is now made to **Figure 1. Figure 1** illustrates a block diagram of a presence system having a first user **110** and a second user **112.** First user **110** wishes to share her "presence aware" business card with second user **112.** First user **110,** utilizing a terminal **120** sends the business card to a relay **130.** Terminal **120** could be any terminal, including, but not limited to, a wireless handset, a laptop computer, a desktop computer, a mobile device, a personal digital assistant, a wireless appliance, among others.

Relay **130** determines the type of message and routes the message through an email server **132.** The email server **132** then directs the message to a recipient terminal **140,** which, in this case, is the terminal of second user **112.**

Second user **112** opens the email on terminal **140.** This action causes an update message to be sent to relay **130** indicating the opening of the business card. In accordance with the present disclosure, the indication has the net effect of establishing user B within user A's roster, and vise versa. This is shown by having a presence service **150** notified of the connection between first user **110** and second user **112.** The presence service **150** maintains a roster for each presentity, and the indication received by the presence service **150** results in the updating of a roster **160** and **162,** representing the rosters of first user **110** and second user **112** respectively.

In the structure of **Figure 1****,** presence service **150** further communicates with a location platform **170,** which is utilized to provide a location of a user. In this case, locations can be published from the location platform and location information can be consumed by various watchers, including second user **112.**

The embodiment of **Figure 1** further includes a rule server **180.** The rule server **180** operates to provide and uphold semantics surrounding presence information elements. For example, rule server **180** may be used to answer questions such as "notify me when I am close to anybody that is on my friends list". Thus, for example, if user **110** wishes to be notified when various friends are close by (e.g. second user **112**), the rule server **180** can be used to provide this notification to user **110.**

The example of **Figure 1** above shows a direct contact between first user **110** and second user **112,** and how the direct contact is used to update the roster of the users.

In a further embodiment, indirect contact can also result in the updating of a roster for a user. Indirect contact is, for example, when a first user **110** sends an email to a user X. In this case, user X is overtly added to the roster of first user **110** if the user X is not already on the roster of user **110.**

However, if user X then replies to the email and adds, for example, as a carbon copy, user B and user C, then relay **130** may, in one embodiment, inform the presence service **150** to add user B and user C to the first user **110's** roster as indirect contacts.

The roster is used by the presence server to maintain a logical matrix. For a given user, the logical matrix comprising contacts versus presence information elements. The complexity of a presentity having to identify and potentially authorize each watcher or prospective watcher a user may communicate with or report status to, is reduced or virtually eliminated through a roster mechanism. Further, the roster also may establish all possible communication paths between a presentity and interested observers, automatically, as the presence service is informed by the communication infrastructure.

In one embodiment the matrix consists of a first column representing other users the first user **110** has interacted with either directly or indirectly. The rows consist of presence data elements. The intersection of a given row and column comprises a cell containing a data element along with the associated element attribute value for the corresponding user (i.e. watcher).

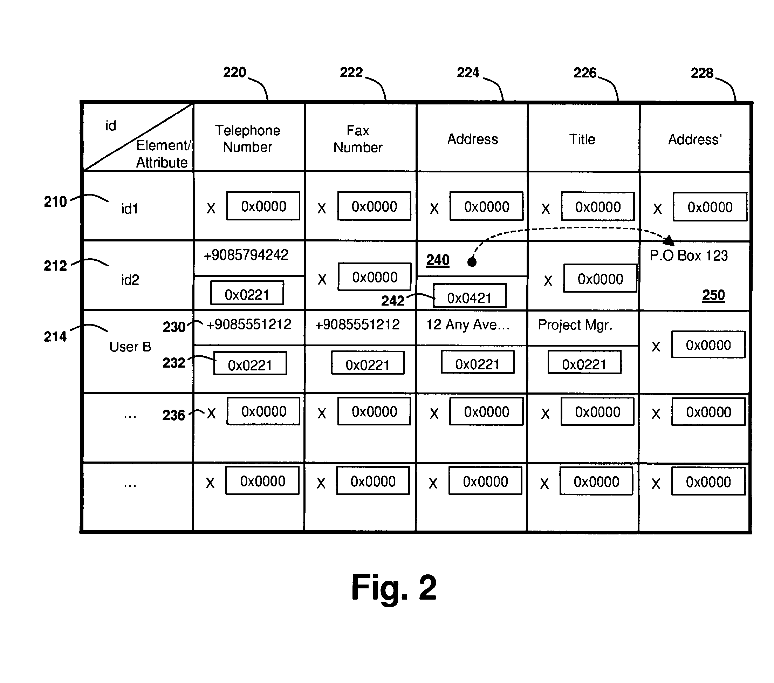

Reference is now made to **Figure 2. Figure 2** shows an exemplary roster matrix for a first user **110.** **Figure 2** illustrates a roster in which the headings of the first row contain elements and attributes that a user may expose to a watcher.

Further, the first column is a list of users that the first user **110** has come into contact with either directly or indirectly.

Thus, for example, in **Figure 2****,** the user has come into contact with various entities, including one identified by "id1", shown as cell **210,** "id2" shown as cell **212** and user B, shown as cell **214.**

Elements or attributes are shown in the first row. Column **220** includes a telephone number, column **222** includes a fax number, column **224** includes an address, column **226** includes a title and column **228** includes an alternative address. Such attributes shown in **Figure 2** are not meant to be limiting and other elements or attributes would be known to those skilled in the art, having regard to the present disclosure.

In each data cell various information can be inserted. Thus, for user B, a telephone number that user A authorizes to share is placed in cell **230.** Cell **230** further includes a data attribute **232,** which is a mask using a data word to encapsulate the attributes, as described in more detail below.

The roster matrix of **Figure 2** provides an indication of all other presence users that the first user **110** has interacted with, including an applicable set of presence information elements. Those presence elements in **Figure 2** correspond to a "presence aware" business card, in one embodiment.

In **Figure 2** various cells are marked with an "X" including cell **236.** The "X" is used to indicate that there is no data value given for the presence user in question or the user for the corresponding row does not have sufficient privileges to receive the associated data element.

Cells that include a data value are published to a given user defined by the cells data element attribute. As an example, the second user, referred to in **Figure 2** as "User B" is permitted to continuously receive the first user's **110** telephone number data using a Unicode string, as indicated by the data attribute **232.**

In addition, according to the example of **Figure 2****,** the user with the identification "id2" receives a variant of the user's "address element" on a one-shot (i.e. one time) basis. This is done in accordance with the data attribute **242.**

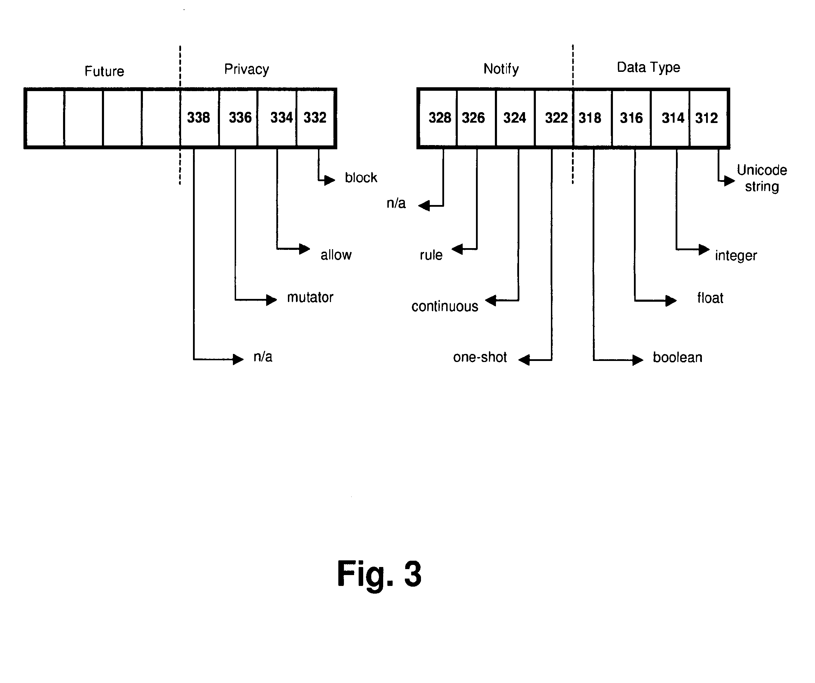

Reference is now made to **Figure 3****.** As noted above, each cell has an associated data element attribute. The attributes, in the example of **Figures 2** and **3** are characterized using a data word to encapsulate attributes such as data type, notification and privacy. In the examples of **Figure 2** and **Figure 3****,** each specific attribute is mapped into a nibble of the high or low order bytes. This is however not limiting, and variations of protocol level presence data element attributes encoding could include tag length encoding/value or a static field structure.

A presence data element attribute mask is illustrated in **Figure 3****,** and includes a mask for each separate byte. Thus, from **Figure 2****,** the telephone number visible to User B indicates data which is specified as "+19085551212 and a data attribute **232** of 0x0221. The mask is parsed in accordance with the attribute mask of **Figure 3****.** In particular, the least significant digit is a "1" in the 0X0221 this nibble is applied to the data type. In this case, the "1" indicates that the "1" when written as a binary nibble is represented as 0001 and thus indicates that the data type is a Unicode string in accordance with box **312** of **Figure 3****.**

If the least significant nibble was a "2" it would indicate that the data type was an integer in accordance with box **314** of **Figure 3****.**

If the least significant nibble was a "4" then the data type is a float in accordance with box **316** of **Figure 3****.**

If the least significant nibble was an "8" then the data type would be boolean (i.e. true or false) in accordance with box **318** of **Figure 3****.**

The next least significant digit in the data attribute represents a notification attribute. In this case, the 0x0221 includes a "2" as the second most least significant nibble. Written in binary this is 0010 and thus, in this case, the value is mapped box **324** for which indicates the notification is continuous.

If this digit was a "1", the value would map to box 322 which indicates that a one-shot notification should be utilized, therefore ensuring that the notification only occurs one time before it is blocked.

If the value of the notification was a "4" then box **326** would be utilized, indicating a rule should be applied for the notification.

The final box of the notification is unspecified, but in the example of **Figure 3** it is indicated as box **328.**

The next least significant nibble indicates a privacy value. Thus, the mask includes a box **332** used to indicate that a block should be utilized for privacy.

A box **334** indicates that the privacy policy is to allow the information to be provided.

A box **336** indicates that the privacy is a mutator, indicating that the privacy changes. Various rules could be applied when the privacy changes, including but not limited to indirection.

Finally, the privacy includes a box **338,** which is not implemented and is therefore not applicable.

In the case of data attribute **232** from **Figure 2****,** the third nibble is a "2", or binary 0010, and thus the privacy policy is to allow the information to be provided.

A fourth nibble in the mask of **Figure 3** is currently not utilized and is provided for future use.

As will be appreciated, the combination of data, along with the mask values in a data attribute, allow for various information to be shared. The attribute indicates the data type for the sharing, notification rules and privacy settings to be easily applied for the sharing of presence data.

The above therefore allows the presence server to quickly obtain information and distribute the presence information, rather then reactively authorize the distribution of information. It provides a much less verbose structure for determining authorization and publication rules relating to published presence information.

Referring again to **Figure 2****,** various options further exist to include indirection. Thus, for example, as seen within cell **240,** instead of providing a data value, indirection could be utilized to provide a pointer to point to a different element or cell. In this case, cell **240** points to cell **250,** which provides an address.

Further, applying the data attribute **242** that is in cell **240,** the 0x0411 when utilizing the attribute mask of **Figure 3** indicates that the element is a Unicode string, it is a one-shot notification providing the address only once, and the privacy policy indicates that it is a mutator, thus indicating that the associated indirection may change (e.g. after initial notification).

The roster of **Figure 2** allows optimized attribution of metadata being distributed. The matrix associated with the roster allows the presence server to associate, for each user on the presentities roster, what metadata the watchers can see and, by extension, what circumstances and when the watcher receives this information.

Changes to the data can be made for the watcher, and include an applicable watcher data type, such as the format that the watcher receives data. Data can also be changed to provide how a watcher is to be notified.

The data can also be varied to include a subscription to indicate whether the element is sharable in one direction or both directions. While subscription is not shown in the example of **Figure 2****,** one skilled in the art would realize that it can be added as an element or attribute, or incorporated as part of the attribute set mask.

Subscription is useful, for example, when sharing metadata elements of a business card. A user **110** might specify that all data elements have bi-directional subscriptions. Therefore, when the second user **112** subscribes to the first user's data, each side is implicitly subscribed to the other side's business card information, since both are watchers and presentities with the other. The result is that the first user **110** never has to explicitly subscribe for the business card of second user **112,** since a subscription is already in place. The result is savings in message overhead, as user **110** is implicitly subscribed to user **112.**

As will be appreciated by those skilled in the art, the data attributes and elements for each entity on a roster needs to be appropriately populated.

While the example of **Figure 1** indicates that the sharing of a business card or the sending of an email may predicate the population of a roster, the population of the roster matrix of **Figure 2** may take several forms. A default mask could be applied when in a context or situation of information sharing is not known. Thus, the roster may by default only expose the public identity of first user **110** such as an email address and a display name.

Further, an attribute set mask could also correspond with the application that indicated the roster update. Thus, the sharing of business cards means that an implicit authorization is given to provide a "title", "business address", "business email", "contact information" among others. The use of a business card and the sharing of a business card indicates that it is a business relationship and this may be used to populate the matrix of **Figure 2****.**

In a further embodiment, the expansion of "eligible" metadata attributes/mask based on relationships could be used. For example, if the first user **110** phones second user **112** after the emailing, this may indicate that a certain relationship exists and may automatically cause the matrix to be updated in both of rosters **160** and **162** respectfully.

Further, an overt update of metadata attributes or masks by a presentity through some sort of policy mechanism could be utilized. For example, user **110** could update what user **112** or a collection of other users can see through a policy mechanism that is translated or transformed into a mask of **Figure 3** to be applied to the matrix of **Figure 2****.**

In a further alternative embodiment, an administrative application by an information service administrator or administrative principal may establish or update information within the roster matrix to establish what the default mask should be.

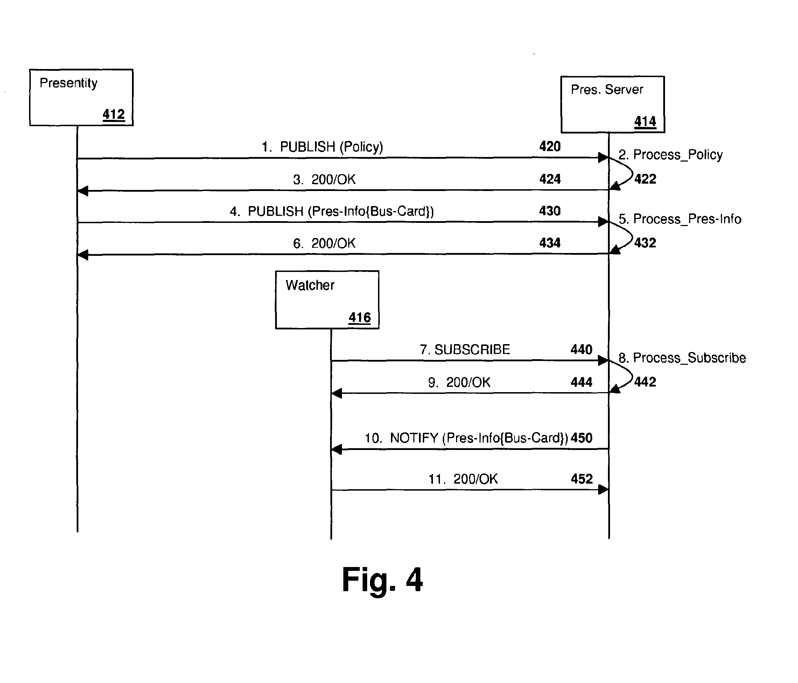

The advantages of using a roster with a distribution matrix is illustrated with reference to **Figures 4****,** **5** **and** **6** below.

**Figure 4** illustrates a simple presence publication and subscription utilizing proactive authorization. In particular a presentity **412** communicates with a presence server **414.** Further, a watcher **416** also communicates with presence server **414.**

In order to allow a watcher **416** to obtain presence information from presentity **412** various steps need to be taken. In particular, presentity **412** must first publish a policy to presence server **414,** as shown by arrow **420.** Presence server **414** then processes the policy as shown by arrow **422** and returns an acknowledgement, as shown by arrow **424.**

Once the policy is published, presentity **412** can then publish, to presence server **414,** a presence aware business card, shown by arrow **430.** Presence server **414,** as shown by arrow **432,** processes the presence information. If the processing is successful then an acknowledgement is sent back to presentity **412** as shown by arrow **434.**

In order for watcher **416** to obtain presence information regarding presentity **412,** watcher **416** must first subscribe for the information of presentity **412** through a subscription message, as shown by arrow **440.** The subscription message is processed by process server **414,** as shown by arrow **442,** and if the processing is successful an acknowledgement is sent back to watcher **416,** shown by arrow **444.**

Based on the policy that was published at arrow **420,** the presence server **414** may proactively provide notifications to watcher **416** regarding presentity **412.** In this case, presence server **414** notifies watcher **416** of the presence aware business card of presentity **412,** shown by arrow **450** and watcher **416** acknowledges the notification as shown by arrow **452.**

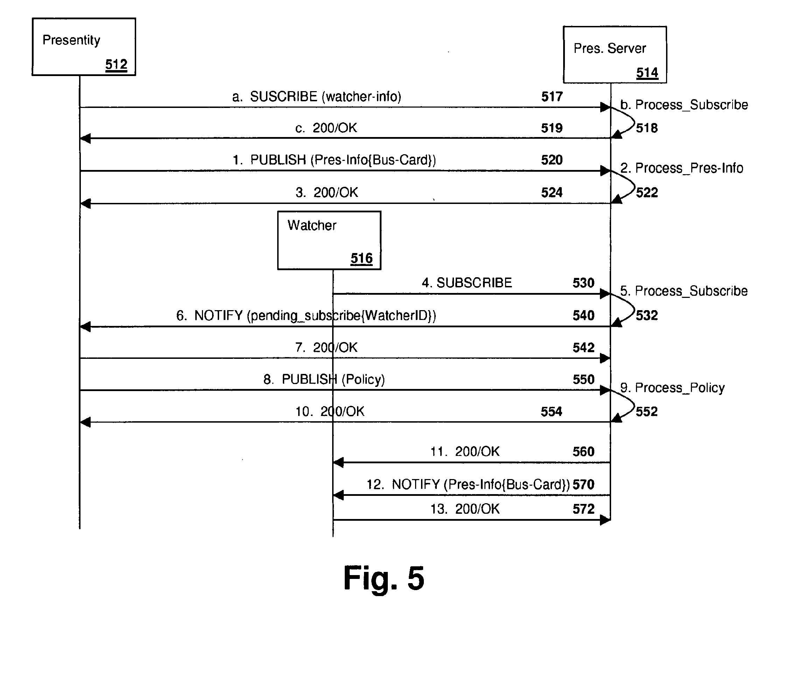

Referring to **Figure 5****,** a reactive subscription model could also be utilized. In this case, a presentity **512** communicates with a presence server **514.** Further, a watcher **516** also communicates with presence server **514.**

Presentity **512** subscribes for watcher-info of presence server **514,** as shown by arrow **517.** The presence server **514** processes the subscription, as shown at arrow **518,** and then sends an acknowledgement 200/OK back to presentity **512,** as shown by arrow **519.** The subscription ensures that the first user can receive a 'reactive authorization notification' from the presence server **514,** when user **516** subscribes for presentity **512** (and no policy for user **516** exists)

The presentity **512** then publishes a presence aware business card to presence server **514** as shown by arrow **520.** The presence aware business card is processed at presence server **514,** shown by arrow **522** and an acknowledgement is returned to presentity **512,** as shown by arrow **524.**

Watcher **516** wishes to obtain presence information for presentity **512.** In order to do this, watcher **516** first sends a subscription request to presence server **514,** as shown by arrow **530.** The subscription request is processed at presence server **514,** shown by arrow **532.** Since the presence model is a reactive authorization model in the example of **Figure 5****,** then presence server **514** provides a notification to presentity **512** indicating that watcher **516** wishes to subscribe for the information of presentity **512,** as shown by arrow **540.** Presentity **512** provides an acknowledgement back to presence server **514,** as shown by arrow **542.**

Presentity **512** then publishes a policy, as shown by arrow **550.** The policy published indicates whether watcher **516** can subscribe to the information of presentity **512** and further what information is allowed to be shared. The policy is processed at presence server **514,** shown by arrow **552.** As a result of the processing, an acknowledgement is sent to presentity **512** as shown by arrow **554.** Further, an acknowledgement is also sent to watcher **516** as shown by arrow **560.** The acknowledgement at arrow **560** acknowledges that the subscription to the presentity was allowed and provides an indication to watcher **516** that notification(s) will follow.

A notification is thereafter sent to watcher **516** providing the presence aware business card of presentity **512,** shown by arrow **570.** Watcher **516** acknowledges the notification, shown by arrow **572.**

With regard to both **Figures 4** and **5****,** a significant amount of signaling is required for the watcher to subscribe to presentity **412** or **512,** and for the presentity **412** or **512** to publish policy information.

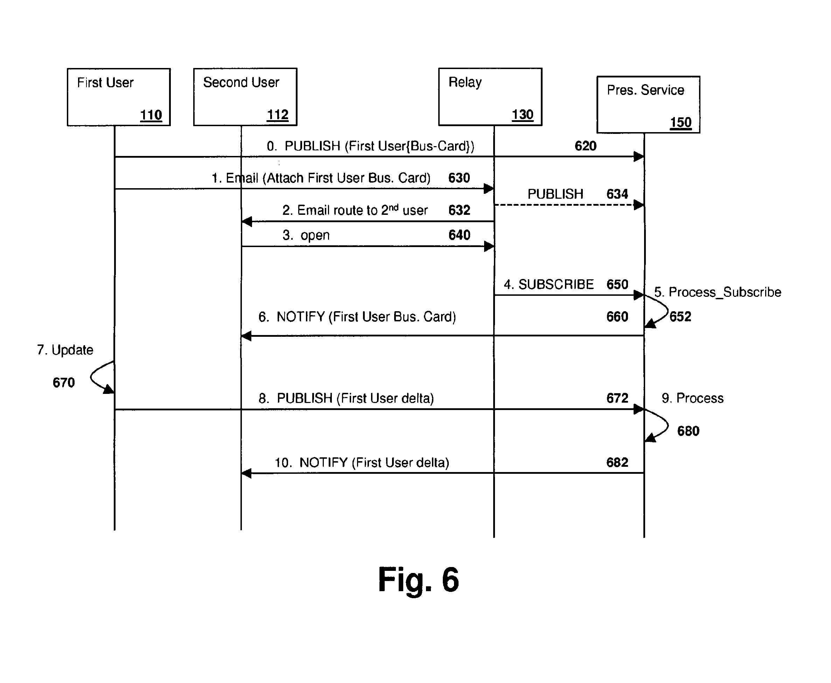

Reference is now made to **Figure 6. Figure 6** shows a first user **110** and a second user **112** that can communicate with each other. A relay **130** can receive messages from first user **110** or second user **112,** as illustrated above with reference to **Figure 1****.** Further, a presence service **150** is capable of communicating with relay **130** and also with first user **110** and second user **112.**

In one embodiment, first user **110** can publish the presence aware business card to presence service **150,** as shown by arrow **620.**

Subsequently, first user **110** may send second user **112** an email in which a reference to the presence aware business card is made. This is done by sending the email through relay **130** as shown by arrow **630** and having the relay **130** route the email to second user **112** as shown by arrow **632.** The business card attachment for these messages can merely be a link, such as a uniform resource locator (URL) since the business card has already been published with presence service **150.**

In an alternative embodiment, instead of publishing the business card, shown by arrow **620,** the first user **110** could send an email to second user **112** as shown by arrow **630.** In this case, the email includes the presence aware business card attached thereto. Relay **130** takes the presence aware business card from the email and publishes it to presence service **150** as shown by arrow **634.** The presence service **150** can then automatically establish roster entries, since it knows who the originator and target(s) are (of the business card). As used here, publish can include the roster, the data attribute's, and the masks that provides the authorization. The creation of a row in the roster matrix for the first user **110** or the second user **112** also populates the row with information. Rules are implied from the 'data attribute mask'.

The email is then routed to the second user **112** as shown by arrow **632.**

If second user **112** opens the email or business card then a notification is sent to relay **130** as indicated by arrow **640** which indicates to relay **130** that first user **110** and second user **112** should be subscribed to each other for presence purposes.

Relay **130** then sends a subscription to presence service **150,** as shown by arrow 650 and the subscription is processed, as shown at arrow **652.** The processing at arrow 652 refers to processing populated roster entries in the roster matrix for the second user **112** to establish what to send and in what format.

Subsequent to the processing at arrow **652** a notification is provided to second user **112,** including the presence aware business card of first user **110.** This is shown at arrow **660.**

At a subsequent time, first user **110** is promoted and the employment title of first user **110** changes to "director". First user **110** updates the business card as shown by arrow **670** and this change is then published to presence service **150,** as shown by arrow **672.**

Presence service **150** processes the publication of the delta information (change in title), as shown at arrow **680,** and provides a notification to the second user **112,** as shown by arrow **682.** Further, the delta has an impact to appropriate cell(s) in the roster matrix, including the fact that user **112** must be notified of a change applicable to the business card. The notification at arrow **682** is provided since the roster of first user **110** includes an entry indicating that second user **112** should be notified of the allowed information continuously and since an update was detected for the business card of first user **110.**

As will be appreciated by those skilled in the art, the notification at arrow **682** is facilitated for presence service **150** by merely having to search through the roster of first user **110** when first user **110** changes its information to indicate who should be notified.

**Figure 6** illustrates that messaging required to publish policies and to subscribe to presence information is reduced through the use of the roster and distribution matrix of **Figure 2****.** This saves network resources and battery life on the terminal of first user **110** or second user **112,** for both scenarios, but especially for the reactive authorization scenario.

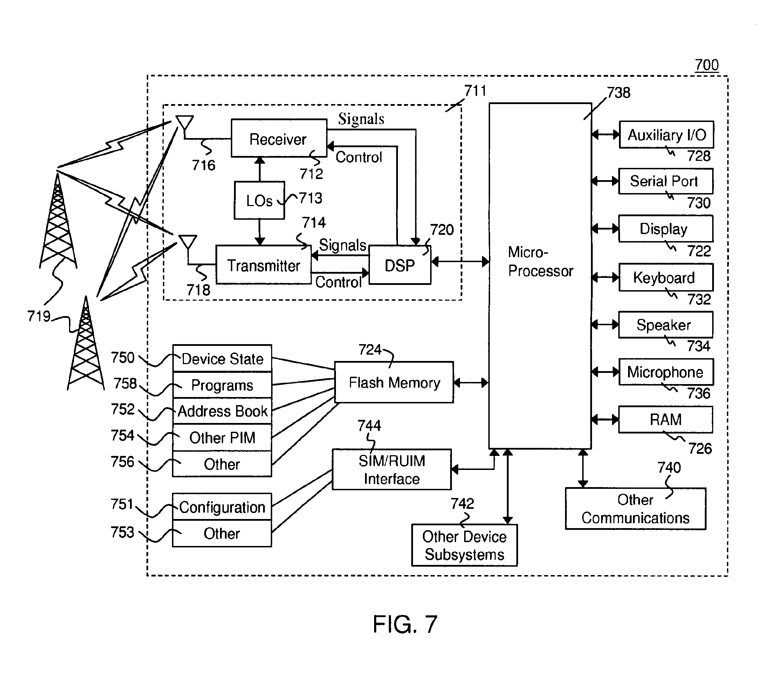

If the terminal of first user **110** or second user **112** is a wireless device, one exemplary mobile device capable of being used is illustrated in **Figure 7****.**

Mobile device **700** is preferably a two-way wireless communication device having at least voice and data communication capabilities. Mobile device **700** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **700** is enabled for two-way communication, it will incorporate a communication subsystem **711,** including both a receiver **712** and a transmitter **714,** as well as associated components such as one or more, preferably embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile device **700.** A CDMA mobile device may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 94K of memory and hold many key configuration **751,** and other information **753** such as identification, and subscriber related information.

When required network registration or activation procedures have been completed, mobile device **700** may send and receive communication signals over the network **719.** As illustrated in **Figure 7****,** network **719** can consist of multiple base stations communicating with the mobile device. For example, in a hybrid CDMA 1 x EVDO system, a CDMA base station and an EVDO base station communicate with the mobile station and the mobile device is connected to both simultaneously. The EVDO and CDMA 1x base stations use different paging slots to communicate with the mobile device.

Signals received by antenna **716** through communication network 719 are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP 720 and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile device **700** preferably includes a microprocessor **738** which controls the overall operation of the device. Communication functions, including at least data and voice communications, are performed through communication subsystem **711.** Microprocessor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the microprocessor **738** is preferably stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and **756.** These different storage types indicate that each program can allocate a portion of flash memory **724** for their own data storage requirements. Microprocessor **738,** in addition to its operating system functions, preferably enables execution of software applications on the mobile device. A predetermined set of applications that control basic operations, including at least data and voice communication applications for example, will normally be installed on mobile device **700** during manufacturing. Other applications could be installed subsequently or dynamically.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **719.** In a preferred embodiment, the PIM data items are seamlessly integrated, synchronized and updated, via the wireless network **719,** with the mobile device user's corresponding data items stored or associated with a host computer system. Further applications may also be loaded onto the mobile device 700 through the network **719,** an auxiliary I/O subsystem **728,** serial port **730,** short-range communications subsystem **740** or any other suitable subsystem **742,** and installed by a user in the RAM **726** or preferably a nonvolatile store (not shown) for execution by the microprocessor **738.** Such flexibility in application installation increases the functionality of the device and may provide enhanced on-device functions, communication-related functions, or both. For example, secure communication applications may enable electronic commerce functions and other such financial transactions to be performed using the mobile device **700.**

In a data communication mode, a received signal such as a text message or web page download will be processed by the communication subsystem **711** and input to the microprocessor **738,** which preferably further processes the received signal for output to the display **722,** or alternatively to an auxiliary I/O device **728.**

A user of mobile device **700** may also compose data items such as email messages for example, using the keyboard **732,** which is preferably a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile device **700** is similar, except that received signals would preferably be output to a speaker **734** and signals for transmission would be generated by a microphone **736.** Alternative voice or audio I/O subsystems, such as a voice message recording subsystem, may also be implemented on mobile device **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7** would normally be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for distributing data between a first user (110) and a second user (112) comprising:
detecting direct or indirect communications between the first user (110) and the second user (112), each communication being associated with an application;
if no entry for the second user exists in a roster (160) of the first user, creating an entry for the second user in the roster of the first user, the entry comprising a data element and a data element attribute, the data element attribute defining how the data element is shared with the second user (112); and
utilizing the roster (160) of the first user (110) to distribute data reflecting the first user (110) to the second user (112);
wherein the at least one data element attribute of the entry is updated for each communication based on the application associated with each communication.

2. The method of claim 1, wherein an indirect communication is a carbon copy of the second user (112) in a communication to the first user (110).

3. The method of any one of claims 1 to 2, wherein the detecting direct communication comprises:
receiving a communication from the first user (110) to the second user (112); and
receiving a notification the second user (112) has opened or referenced the communication.

4. The method of any one of claims 1 to 3, wherein the utilizing checks the attribute of the data element for the second user (112).

5. The method of claim 4, wherein the attribute is a data word corresponding with a mask.

6. The method of claim 5, wherein the mask specifies attributes for at least one of notification options, privacy options, data type options and subscription options.

7. The method of any one of claims 1 to 6, wherein a data element attribute provides indirection to another data element.

8. The method of any one of claims 1 to 7, wherein the populating utilizes one or more of:
a default mask based on a context or situation;
a mask based on an application that initiated a roster update;
an update mask based on further communication between the first user (110) and the second user (112);
an overt update mask based on a policy of the first user (110) towards the second user (112) or a plurality of other users; and
an administrative application.

9. A data service within a network for distributing data, the data service configured to perform the method of any one of claims 1 to 8.

10. The data service of claim 9, wherein the data service is a presence service, location service or content delivery service.

11. The data service of claim 10, wherein the roster is a matrix comprising users the data service has communicated with directly or indirectly versus data elements and attributes.

12. The method of any one of claims 1 to 8, wherein the application determines whether the at least one data element attribute reflects a business relationship between the first user (110) and the second user (112).

13. The method of any one of claims 1 to 8, further including the step of:
populating the entry for the first user (110) in a roster (162) of the second user (112).

## Patentansprüche

1. Verfahren zum Verteilen von Daten zwischen einem ersten Benutzer (110) und einem zweiten Benutzer (112), das aufweist:
Erfassen von direkten oder indirekten Kommunikationen zwischen dem ersten Benutzer (110) und dem zweiten Benutzer (112), wobei jede Kommunikation zu einer Anwendung gehört;
wenn kein Eintrag für den zweiten Benutzer in einem Verzeichnis (160) des ersten Benutzers existiert, Erzeugen eines Eintrags für den zweiten Benutzer in dem Verzeichnis des ersten Benutzers, wobei der Eintrag ein Datenelement und ein Datenelementattribut aufweist, wobei das Datenelementattribut definiert, wie das Datenelement mit dem zweiten Benutzer (112) gemeinsam benutzt wird; und
Verwenden des Verzeichnisses (160) des ersten Benutzers (110), um Daten, die den ersten Benutzer (110) reflektieren, an den zweiten Benutzer (112) zu verteilen;
wobei das zumindest eine Datenelementattribut des Eintrags für jede Kommunikation basierend auf der Anwendung aktualisiert wird, die zu jeder Kommunikation gehört.

2. Verfahren gemäß Anspruch 1, wobei eine indirekte Kommunikation eine CC-Kopie des zweiten Benutzers (112) in einer Kommunikation zu dem ersten Benutzer (110) ist.

3. Verfahren gemäß einem der Ansprüche 1 bis 2, wobei das Erfassen einer direkten Kommunikation aufweist:
Empfangen einer Kommunikation von dem ersten Benutzer (110) an den zweiten Benutzer (112); und
Empfangen einer Benachrichtigung, dass der zweite Benutzer (112) die Kommunikation geöffnet oder referenziert hat.

4. Verfahren gemäß einem der Ansprüche 1 bis 3, wobei das Verwenden das Attribut des Datenelements für den zweiten Benutzer (112) überprüft.

5. Verfahren gemäß Anspruch 4, wobei das Attribut ein Datenwort ist, das einer Maske entspricht.

6. Verfahren gemäß Anspruch 5, wobei die Maske Attribute für zumindest eine aus Benachrichtigungsoptionen, Privatbereichsoptionen, Datentypoptionen und Subskriptionsoptionen spezifiziert.

7. Verfahren gemäß einem der Ansprüche 1 bis 6, wobei ein Datenelementattribut einen Verweis zu einem anderen Datenelement liefert.

8. Verfahren gemäß einem der Ansprüche 1 bis 7, wobei das Befüllen eines oder mehr verwendet aus:
eine Standardmaske basierend auf einem Kontext oder einer Situation;
eine Maske basierend auf einer Anwendung, die eine Verzeichnisaktualisierung initiiert;
eine Aktualisierungsmaske basierend auf weiterer Kommunikation zwischen dem ersten Benutzer (110) und dem zweiten Benutzer (112);
eine offene Aktualisierungsmaske basierend auf einer Richtlinie des ersten Benutzers (110) zu dem zweiten Benutzer (112) oder einer Vielzahl von anderen Benutzern; und
eine administrative Anwendung.

9. Datendienst in einem Netzwerk zum Verteilen von Daten, wobei der Datendienst konfiguriert ist zur Durchführung des Verfahrens gemäß einem der Ansprüche 1 bis 8.

10. Datendienst gemäß Anspruch 9, wobei der Datendienst ein Präsenzdienst, ein Standortdienst oder ein Inhaltlieferdienst ist.

11. Datendienst gemäß Anspruch 10, wobei das Verzeichnis eine Matrix ist, die Benutzer aufweist, mit denen der Datendienst direkt oder indirekt kommuniziert hat, versus Datenelemente und Attribute.

12. Verfahren gemäß einem der Ansprüche 1 bis 8, wobei die Anwendung bestimmt, ob das zumindest eine Datenelementattribut eine Geschäftsbeziehung zwischen dem ersten Benutzer (110) und dem zweiten Benutzer (112) reflektiert.

13. Verfahren gemäß einem der Ansprüche 1 bis 8, das weiter den Schritt umfasst:
Füllen des Eintrags für den ersten Benutzer (110) in einem Verzeichnis (162) des zweiten Benutzers (112).

## Revendications

1. Procédé de distribution de données entre un premier utilisateur (110) et un second utilisateur (112), comprenant les étapes consistant à:
détecter des communications directes ou indirectes entre le premier utilisateur (110) et le second utilisateur (112), chaque communication étant associée à une application ;
s'il n'existe pas d'enregistrement pour le second utilisateur dans la liste des contacts (160) du premier utilisateur, créer un enregistrement pour le second utilisateur dans la liste des contacts du premier utilisateur, l'enregistrement comprenant un élément de données et un attribut d'élément de données, l'attribut d'élément de données définissant comment l'élément de données est partagé avec le second utilisateur (112) ; et
utiliser la liste des contacts (160) du premier utilisateur (110) pour distribuer au second utilisateur (112) des données qui reflètent le premier utilisateur (110) ;
dans lequel ledit au moins un attribut d'élément de données de l'enregistrement est mis à jour à chaque communication, sur la base de l'application associée à chaque communication.

2. Procédé selon la revendication 1, dans lequel une communication indirecte est une copie adressée au second utilisateur (112) dans une communication adressée au premier utilisateur (110).

3. Procédé selon l'une quelconque des revendications 1 et 2, dans lequel l'étape de détection d'une communication directe comprend les étapes consistant à:
recevoir une communication du premier utilisateur (110) et au second utilisateur (112) ; et
recevoir une notification indiquant que le second utilisateur (112) a ouvert ou référencé la communication.

4. Procédé selon l'une quelconque des revendications 1 à 3, dans lequel l'étape d'utilisation examine l'attribut de l'élément de données pour le second utilisateur (112).

5. Procédé selon la revendication 4, dans lequel l'attribut est un mot de données correspondant à un masque.

6. Procédé selon la revendication 5, dans lequel le masque spécifie des attributs pour au moins une option parmi des options de notification, des options de protection des données individuelles, des options de type de données et des options d'abonnement.

7. Procédé selon l'une quelconque des revendications 1 à 6, dans lequel un attribut d'élément de données fournit une redirection vers un autre élément de données.

8. Procédé selon l'une quelconque des revendications 1 à 7, dans lequel l'étape de renseignement des données utilise un ou plusieurs éléments parmi les suivantes :
un masque par défaut basé sur un contexte ou une situation ;
un masque basé sur une application qui a lancé une mise à jour de la liste de contacts ;
un masque de mise à jour basé sur une autre communication entre le premier utilisateur (110) et le second utilisateur (112) ;
un masque de mise à jour manifeste basé sur une action du premier utilisateur (110) vers le second utilisateur (112) ou une pluralité d'autres utilisateurs ; et
une application administrative.

9. Service de données au sein d'un réseau, pour la distribution de données, le service de données étant configuré pour exécuter le procédé selon l'une quelconque des revendications 1 à 8.

10. Service de données selon la revendication 9, dans lequel le service de données est un service de présence, un service de localisation ou un service de livraison de contenus.

11. Service de données selon la revendication 10, dans lequel la liste de contacts est une matrice comprenant des utilisateurs avec lesquels le service de données a communiqué directement ou indirectement, ainsi que des éléments de données et des attributs.

12. Procédé selon l'une quelconque des revendications 1 à 8, dans lequel l'application détermine si ledit au moins un attribut d'élément de données reflète une relation d'affaires entre le premier utilisateur (110) et le second utilisateur (112).

13. Procédé selon l'une quelconque des revendications 1 à 8, comprenant en outre l'étape consistant à :
renseigner l'enregistrement du premier utilisateur (110) dans une liste de contacts (162) du second utilisateur (112).
